# EUROPEAN PATENT SPECIFICATION

(11) **EP 1 448 574 B1**
(45) Date of publication and mention of the grant of the patent: **15.06.2005**
(21) Application number: 02783056.1
(22) Date of filing: 31.10.2002
(51) Int. Cl.: C07F 9/54, C07F 5/02, H01M 10/40, H01M 6/16

(54) **PHOSPHORUS-BORATES WITH LOW MELTING POINTS**
PHOSPHOR-BORATE MIT NIEDRIGEM SCHMELZPUNKT
BORATES DE PHOSPHORE A TEMPERATURE DE FUSION BASSE

(30) Priority: 28.11.2001 EP 01127468
(43) Date of publication of application: 25.08.2004
(73) Proprietor: MERCK PATENT GmbH, 64293 Darmstadt (DE)
(72) Inventor: SCHMIDT, Michael, 64342 Seeheim-Jugenheim (DE); WELZ-BIERMANN, Urs, 64646 Heppenheim (DE); VAUGHAN-SPICKERS, Julian, North Badddesley, Southampton S052 9NE (GB); SEDDON, Ken, Donaghadee BT21 0LA (GB); DOWNHARD, Andrew, Hamilton, Ontario L8P 1R2 (CA)
(86) International application number: PCT/EP2002/012163
(87) International publication number: WO 2003/045960

(56) References cited:
- WO-A-99/40025
- US-A- 5 827 602

## Description

The present invention relates to phosphorous borates, methods for their preparation and to the use of these salts in primary batteries, secondary batteries, capacitors, supercapacitors and/or galvanic cells.
Furthermore, the present invention relates to the use of these salts as hydraulic liquid, conducting salt, catalyst, solvent, electrolyte or starting compound.

Weakly associated salts are the basis of many electrolytes. They are useful in electrochemical cells such as batteries, electronic parts such as capacitors, double layer capacitors, super or ultra capacitors as well as for organic synthesis, especially catalysis.

Solvent-free ionic liquids or "room temperature molten salts" were first disclosed in US 2,446,331. A disadvantage of these first molten salts and a serious problem with any solvent-free ionic liquid containing strong Lewis acids such as AlCl₃ is the liberation of toxic gases upon exposure to moisture. Work in room temperature melts has been dominated by the use of AlCl₃ and 1-ethyl-3-methylimidazolium (EMI) chloride. Wilkes and Zaworotko presented new solvent-free ionic liquids in 1992, EMI BF₄ and EMI O₂CCH₃ (J. Chem. Soc. Commun., 1992, S. 965). However, these ionic media suffer from the same problems with moisture as previous compounds. Because BF₄⁻- and CH₃CO₂⁻-anions oxidize at relatively low potentials, they are unsuitable for use in electrochemical cells.

US 5,827,602 teaches ionic liquids comprising a number of heterocyclic organic cations and imides or methanides as counteranion. These ionic liquids demonstrate good conducting properties. A disadvantage of these salts lies with the costly preparation of the starting compounds, in particular the preparation of the anions.

Accordingly, there is a need for the provision of solvent-free ionic liquids that demonstrate a broad temperature range in a molten state and at the same time are suitable for electrochemical applications and economical in their preparation.

A further problem underlying the present invention is the provision of more powerful and more stable primary and secondary batteries, capacitors, supercapacitors and galvanic cells.

This problem is solved according to the present invention by providing new salts of the general formula [I],

[PR¹R²R³R⁴]⁺[B(OR⁵)ₙ(OR⁶)ₘ(OR⁷)ₒ(OR⁸)ₚ]⁻ (I)

wherein
R¹, R², R³, R⁴ denote, in each case independently of one another,
a C₁₋₂₀ linear, branched or cyclic, saturated or unsaturated aliphatic radical or a C₆₋₂₀-aromatic or heteroaromatic radical,
wherein the aliphatic, aromatic or heteroaromatic radicals may comprise one or more ether functional groups and/or may be further substituted, preferably further substituted by at least one radical of the formula -C_{q}F_{(2q+1-x)}Hₓ, wherein 1≤q≤6 and 0≤x≤2q+1,
R⁵, R⁶, R⁷ and R⁸ denote, in each case independently of one another, a C₆₋₂₀ aromatic or heteroaromatic radical, that may be further substituted by at least one halogen-radical, preferably a F- or Cl-radical and/or at least one radical of the formula -C_{q}F_{(2q+1-x)}Hₓ, wherein 1≤q≤6 and 0≤x≤2q+1,
or a C₁₋₈, linear, branched or cyclic, saturated or unsaturated, aliphatic radical, that may be further substituted by at least one halogen-radical, preferably a F- or Cl-radical and/or at least one radical of the formula
-N(C_{q}F_{(2q+1-x)}Hₓ)₂, -O(C_{q}F_{(2q+1-x)}Hₓ), -SO₂ (C_{q}F_{(2q+1-x)}Hₓ) or -C_{q}F_{(2q+1-x)}Hₓ, wherein 1≤q≤6 and 0≤x≤2q+1,
or a carboxylic-, dicarboxylic- or hydroxycarboxylic, linear, branched or cyclic, saturated or unsaturated C₁₋₈-aliphatic or C₆₋₂₀-aromatic or heteroaromatic radical that may be further substituted by at least one halogen-radical,
preferably a F- or Cl-radical and/or at least one radical of the formula -N(C_{q}F_{(2q+1-x)}Hₓ)₂, -O(C_{q}F_{(2q+1-x)}Hₓ), -SO₂ (C_{q}F_{(2q+1-x)}Hₓ) or -C_{q}F_{(2q+1-x)}Hₓ,wherein 1≤q≤6 and 0≤x≤2q+1,
and wherein
at least two of the radicals R¹, R², R³, R⁴ may be bound to each other by single or double bonds, and/or
at least two of the radicals R⁵, R⁶, R⁷, R⁸ may be bound to each other by single or double bonds,
and 0 ≤ n, m, o, p ≤ 4 and m + n + o + p = 4
and wherein the following salts are disclaimed:
Bis[salicylato(2-)]borate (III)-tetrabutylphosphonium,
Tetrakis[1-naphthalenolato (1-)]-borate-tetraphenylphosphonium,
Bis[2-hydroxybenzoato (2-)]-borate-tetrabutylphosphonium,
Bis[1,2-benzodiolato(2-), O, O']-borate-tetraphenylphosphonium,
Tetrabutoxy(1-)borate-tetraphenylphosphonium,
Tetrakis(1,1'biphenyl-4,4'-diolato)-borate-tetraphenylphosphonium,
Bis[2,3-naphthalendiolato (2-) O, O']-borate-tetraphenylphosphonium.

In a preferred embodiment the present invention relates to salts wherein at least two of the radicals R¹, R², R³, R⁴ are identical and/or bound to each other by single or double bonds.

A further preferred embodiment relates to salts, wherein at least two of the radicals R⁵, R⁶, R⁷, R⁸ are identical and/or bound to each other by single or double bonds.

More preferred salts are those, wherein at least one of the radicals, R⁵, R⁶, R⁷ and R⁸ denotes, in each case independently of one another, a radical selected from the group consisting of phenyl-, naphthyl-, anthracenyl, phenanthrenyl, pyridyl-, pyracyl- or pyrimidyl-radicals, that may be further substituted by at least one halogen radical, preferably a F- or Cl-radical and/or at least one radical of the formula -C_{q}F_{(2q+1-x)}Hₓ, wherein 1≤q≤6 and 0≤x≤2q+1.

Further more preferred salts are those, wherein at least one of the radicals R¹, R², R³, R⁴ denotes phenyl or C₁₋₂₀-alkyl, most preferably C₆H₁₃- or C₁₄H₂₉-alkyl.

In a most preferred embodiment the present invention relates to salts, wherein at least two of the radicals R⁵, R⁶, R⁷ or R⁸ denote a 2,2'-biphenyl-diolato(2')O,O'-, a 1,2-benzen-diolato(2-)O,O'- or a salicylato(2-)-radical.

Furthermore, most preferred salt are those, wherein [B(OR⁵)ₙ(OR⁶)ₘ (OR⁷)ₒ(OR⁸)ₚ]⁻ denotes bis[2,2'-biphenyl-diolato(2')O,O']-borate, bis[1,2-benzen-diolato(2-)O,O']-borate or bis[salicylato(2-)]-borate.

The salts of the present invention provide a number of advantages. They are not sensitive to hydrolysis. Their tendency to decompose is very small. They have a high thermal stability and they are soluble in most standard aprotic solvents, even in unpolar solvents of low viscosity such as toluene or hexane. In addition, these salts demonstrate a very large temperature range of up to several hundred degrees Celcius in which they are in a stable molten state. For example, [P(C₆H₁₃)₃C₁₄H₂₉)][B(OC(O)(C₆H₄)O)₂] is a liquid from -150 to +300°C. Therefore, these salts are suitable for a number of applications, such as electrochemical applications or as hydraulic liquid, or for the catalysis of organic reactions or as inert solvent for highly reactive chemicals.
They are especially useful as salts for electrolytes. Electrolytes comprising said salts are electrochemically stable, temperature and humidity resistent. Also, such electrolytes demonstrate an excellent cyclic behavior and performance in electrical cells.

A further aspect of the present invention relates to a method for the preparation of salts, wherein a salt of the general formula [II]

[PR¹R²R³R⁴]ₐ ⁺A^{a-} [II]

and a salt of the general formula [III]

K^{b+}[B(OR⁵)ₙ(OR⁶)ₘ(OR⁷)ₒ(OR⁸)ₚ]_{b} ⁻ [III]

wherein
A⁻ denotes an anion, a= 1 to 3, preferably a=1, more preferably an anion chosen from Cl, Br, or I,
K⁺ denotes a cation, b= 1 to 3, preferably b=1, more preferably a cation chosen from H, Li, K, Na, Ag or NR¹ ₄ ⁺,
and R¹, R², R³, R⁴, R⁵, R⁶, R⁷, R⁸, n, m, o, p, have the meanings according to claim 1,
are disolved in a suitable solvent and mixed and the resulting salt is isolated and/or purified.

Standard methods well known to those skilled in the art may be used for the isolation and/or purification of the resulting salt.

In a preferred embodiment the resulting salt is purified by separating the byproduct K⁺A⁻ by precipitation, ionic exchange chromatography or by evaporation, if K⁺ denotes hydrogen.

A number of suitable aprotic solvents are available for the preparation of the salts, such as, for example, esters, ethers, carbonates, nitriles, sulfonicacidesters, toluene, methylenechloride, CHCl₃.

Preferred suitable solvents are acetonitrile, THF (tetrahydrofurane) or a mixture of at least two of these solvents.

More preferred suitable solvent are aprotic solvents, preferably acetonitrile or THF (tetrahydrofurane) or a mixture of at least two aprotic solvents, wherein the resulting salt K⁺A⁻ is unsoluble.

A preferred temperature range for mixing the salts of formula [II] and [III] is 0 to 100°C, more preferably 0 to 50°C and most preferably 10 to 40°C.

In a preferred embodiment the reaction is carried out in a solvent or solvent mixture that is directly suitable for use in a secondary or primary battery, a capacitor, a supercapacitor or a galvanic cell.

Preferred solvents or solvent mixtures that are directly suitable for use in a secondary or primary battery, a capacitor or a galvanic cell are organic carbonates, preferably an ethylenecarbonate, propylenecarbonate, butylene-carbonate, dimethylcarbonate, diethylcarbonate, ethylmethylcarbonate, methylpropylcarbonate or a mixture of at least two of these solvents.

The method according to the present invention provides almost pure salts in high yield with little impurities. Often the reaction proceeds to give quantitative yields and only traces of impurities. If necessary, the salts may be further purified according to standard methods, for example, by recrystallisation in a suitable solvent or solvent mixture. A suitable solvent or solvent mixture can easily be selected by preliminary experiments.
The method for preparing the salts according to the invention is simply, efficient and without any complicated or dangerous steps.

In a further aspect, the present invention relates to the use of at least one of the salts according to the invention alone or in combination with further salts and/or additives in primary batteries, secondary batteries, capacitors, supercapacitors and/or galvanic cells.

The salts are suitable for preparing electrolytes, preferably electrolytes for primary batteries, secondary batteries, capacitors, supercapacitors and/or galvanic cells.
Such an electrolyte comprises at least one compound of the present invention. The preparation of soluble or solid electrolytes is well known to the average expert in the field of electrochmistry (for example: D. Linden, Handbook of Batteries, Second Edition, McGraw-Hill Inc., New York 1995; J. Barthel and H.-J. Gores, Solution Chemistry: A Cutting Edge in Modern Electrochemical Technology in G. Mamantov and A.I. Popov (publishers) Chemistry of Nonaquous Solutions, Current Progress, VCH Verlagsgemeinschaft, Weinheim 1994).
Electrolytes can be prepared as a solution or a solid material. A solid electrolyte may be a polymer electrolyte optionally comprising a cross-linked polymer and at least one conducting salt or a gel electrolyte that comprises at least one solvent in addition to at least one conducting salt and an optional cross-linked polymer.

In a preferred embodiment, these electrolytes have a salt concentration of the electrolyte of 0,01 - 3 mol/l, preferably of 0,01 - 2 mol/l, most preferably of 0,1 -1,5 mol/l.

Electrolytes according to the present invention provide excellent electrochemical properties for most uses in batteries, conductors and galvanic cells. These electrolytes provide excellent conductivity as well as stability and safety.

In a further aspect of the present invention relates to primary batteries, secondary batteries, capacitors, supercapacitors and/or galvanic cells comprising at least one of the salts of the present invention.

In a further aspect of the present invention relates to a hydraulic liquid comprising at least one compound of the general formula [I].

Primary batteries, secondary batteries, capacitors, supercapacitors, galvanic cells or hydraulic liquids according to the present invention are suitable to be employed under extreme conditions such as high temperatures or high humidity without an effect on the performance or life span of the device or liquid.

In a further aspect the present invention relates to the use of a salt according to the present invention as a solvent or as a conducting salt in an electrolyte of electrochemical devices.

Preferably, salts of the present invention are used as a catalyst, solvent, electrolyte or starting compound for the preparation of organic compounds.

### Examples

The following examples merely serve to illustrate the invention in an exemplary manner. The examples are not meant to limit the general concept of the present invention in any way.

The following abbrevations will be used below:
- BBPB: bis[2,2'-biphenyl-diolato(2')O,O')-borate
- BBB: bis[1,2-benzene-diolato(2-)O,O]-borate
- BSB: bis[salicylato(2-)]-borate
- C₆: C₆H₁₃
- C₁₄: C₁₄H₂₉

### Example 1 Synthesis and Characterisation of [(C₆)₃P(C₁₄)][BBPB]

Both, Li[BBPB] (2.61 g, 6.75 mmol) and [(C₆)₃P(C₁₄)][Cl] (3.51g, 6.75 mmol) were each dissolved completely in 150 ml acetonitrile to give clear, colourless solutions. Upon addition of the former to the latter no change was produced initially. A fine white precipitate developed over the first several minutes of stirring. After three hours of stirring at room temperature the solution was filtered through a sintered glass funnel (#3) to give a clear, colourless filtrate. Removal of the solvent by rotavap yielded a white slurry, which was taken up in 125 ml CH₂Cl₂. This solution was washed repeatedly with water (5 x 300 mL) until the solution became clear and pale yellow in color. Removal of the solvent by rotavap produced a pale yellow, viscous liquid. This was heated to 100 °C under vacuum for three hours to remove any residual solvent.
The total yield of product, identified as [(C₆)₃P(C₁₄)][BBPB], was 5.30 g (90%).

### Example 2 Synthesis and Characterisation of [(C₆)₃P(C₁₄)][BBB]

Both Li[BBB] (1.87 g, 7.99 mmol) and [(C₆)₃P(C₁₄)][Cl] (3.65 g, 7.03 mmol) were dissolved completely in 100 ml THF each to give clear, colourless solutions. These were combined in a 250 ml round-bottom flask and allowed to stir for one hour, during which time no changes were observed. The reaction mixture was then cooled in an ice-bath and 20 ml cold hexane were added, producing a hazy, white precipitate. This mixture was filtered though a sintered glass funnel (#3) and the solvent was removed by rotavap. The resulting yellow liquid was taken up in 100 ml CH₂Cl₂ and washed with water repeatedly (5 x 300 ml). Removal of the solvent by rotavap yielded a clear, slightly pink liquid, which reverted to a solid after several hours at room temperature. This precipitate was heated to 100 °C under vacuum for one hour to remove any residual solvent.
Total yield of this solid, identified as [(C₆)₃P(C₁₄)][BBB], was 4.07g (5.72 mmol, 81 mol %).
- Melting point: 49 °C; (decomposition above 200 °C, no freezing point observed).
- Solubility: see table 1
- Analysis calculated for C₄₄H₇₆BO₄P [%]: C, 74.34; H,10.78; N, 0.00.
- Found: C; 74.09; H, 10.98; N, 0.00.
- ¹H-NMR [300 MHz, δ(TMS in CDCl₃)] in CDCl₃ at 25 °C: δ = 6.59 (s, 8 H, anion); 2.17-0.88 (m, 68 H, cation).
- ¹³C-NMR [75.45 MHz, δ(TMS in CDCl₃)] in CDCl₃ at 25 °C: δ = 152.06, 118.23, 108.94 (s, anion); 32.31-14.30 (various s, cation).
- ³¹P-NMR [121.49 MHz] in CDCl₃ at 25 °C: δ = 30.3.
- ¹¹B-NMR [160.46 MHz, δ(BF₃•OEt₂ in D₂0)] in D₆-acetone at 25 °C: δ = 10.87.

### Example 3 Synthesis and Characterisation of [(C₆)₃P(C₁₄)][BSB]

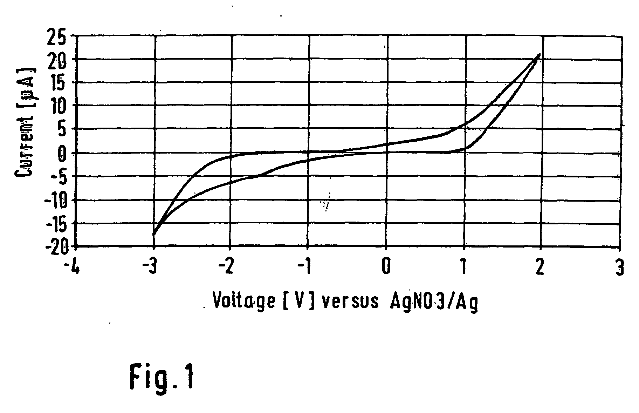

Both, Li[BSB] (5.75 g, 19.84 mmol) and [(C₆)₃P(C₁₄)][Cl] (10.29 g, 19.81 mmol) were dissolved with gentle heating in 75 ml acetonitrile each to give clear, colourless solutions. These were combined in a 500 ml round-bottom flask. No changes were observed initially, but after several seconds a white precipitate developed. The reaction was allowed to stir for one hour at room temperature during which time no further changes were observed. Filtration through a sintered glass funnel (#3) gave a clear, colourless filtrate and a small amount of white powder (LiCl). Removal of the solvent by from the filtrate by rotavap gave a white slurry. This was taken up in 150 ml CH₂Cl₂ and washed with water repeatedly (8 x 300 ml), producing a clear, faintly yellow liquid. Removal of the solvent by rotavap yielded a clear, colourless oil, which was heated to 90 °C under vacuum for one hour to remove any residual solvent.
Total yield of liquid, identified as [(C₆)₃P(C₁₄)][BSB], was 14.51g (18.92mmol, 96%).
- No freezing/melting points observed in the range -150 to 300°C.
- Solubility: see table 1.
- Viscosity: see table 2
- Electrochemical stability: see Figure 1
- Analysis calculated for C₄₄H₇₆B0₄P [%]: C, 72.05; H, 9.99; N, 0.00.
- Found: C; 70.70; H, 10.16; N, 0.05.
- ¹H-NMR [300 MHz, δ(TMS in CDCl₃)] in D₆-acetone at 25 °C: δ = 7.98 (m, 2 H), 7.25 (m, 2 H), 6.73 (m, 4 H) (anion); 2.21-0.75 (m, 68 H, cation)
- ¹³C-NMR [75.45 MHz, δ(TMS in CDCl₃)] in CDCl₃ at 25 °C: δ = 165.41, 161.21, 135.27, 130.75, 119.42, 117.54 (s, anion); 33.06-14.70 (various s, cation)
- ³¹P-NMR [121.49 MHz] in D₆-acetone at 25°C: δ = 33.5.
- ¹¹B-NMR [160.46 MHz, δ(BF₃•OEt₂ in D₂O)] in D₆-acetone at 25 °C: δ = 0.20.

### Physicochemical characterlsation of the salts of the examples

### Example 4 Determination of solubility

Solubility was determined only qualitatively by mixing approximately 0,5 ml of the ionic liquid with the same amount of organic solvent and shaking. All samples were checked a second time after several hours to ensure, that no slow phase separation had occured.

**Table 1**

| Solubility of [R₄P] [X] (X = BBB, BSB, BBPB; R₄P=(C₆)₃P(C₁₄) | | | |
|---|---|---|---|
| Solvent | [R₄P] [BBB] | [R₄P] [BSB] | [R₄P] [BBPB] |
| water | N | N | N |
| acetone | Y | Y | Y |
| iso-propyl alcohol | Y* | Y | Y* |
| diethyl ether | Y | Y | Y |
| tetrahydrofurane | Y | Y | Y |
| dichloromethane | Y | Y | Y |
| chloroform | Y | Y | Y |
| hexane | N** | N** | Y |
| toluene | Y | Y | Y |
| acetonitrile | Y* | Y* | Y* |
| Y stands for soluble, N stands for not soluble | | | |

| | | | |
|---|---|---|---|
| * gentle heating required | | | |
| * * mixture becomes cloudy, then separates into two clear layers | | | |

### Example 5 Determination of viscosity

Viscosity was measured using an LVDV-II Brookfield Cone and Plate Viscometer (1 % accuracy, 0,2 repeatability). The sample cup of the viscometer was fitted with luer and purge fittings, so that a positive current of dry dinitrogen was maintained at all times during the measurements, thus avoiding absorption of atmospheric moisture. The sample cup was jacketed with a circulating water bath that was controlled by a circulator bath Grant LTD 6G (+0.1 °C accuracy).

**Table 2:**

| Viscosity [cP] of [R₄P] [X] (X = BBB, BSB, BBPB; R₄P=(C₆)₃P(C₁₄) | | | |
|---|---|---|---|
| Temperature | [R₄P] | [R₄P] | [R₄P] |
| (°C) | [BSB] | [BBB] | [BBPB] |
| 5 | 7334 | - | 95020 |
| 10 | 4241 | - | 59233 |
| 15 | 2663 | 6184 | 33737 |
| 20 | 1730 | 3735 | 20660 |
| 25 | 1164 | 2439 | 12813 |
| 30 | 801.4 | 1593 | 8245 |
| 35 | 566.3 | 1087 | 5453 |
| 40 | 407.0 | 739.8 | 3675 |
| 45 | 300.4 | 538.1 | 2703 |
| 50 | 229.6 | 386.7 | 1953 |
| 55 | 171.4 | 288.3 | 1393 |
| 60 | 132.6 | 217.2 | 1022 |
| 65 | 106.3 | 168.2 | 759.0 |
| 70 | 85.1 | 126.3 | 550.7 |
| 75 | 68.4 | 100.2 | 333.9 |
| 80 | 56.4 | 81,0 | 209.2 |
| 85 | 47.2 | 65,2 | 173.0 |
| 90 | 39.9 | 50,2 | 177.8 |
| 95 | 34.1 | 40,91 | |

### Example 6 Determination of electrochemical stability of [(C₆)₃P(C₁₄)][BSB]

All electrochemical experiments were carried out with an EG&G PARC Model 283 potentiostat/galvanostat connected to a PC through an IEEE-488 bus and controlled using EG&G Parc Model 270/250 Research Electrochemistry version 4.23 software. Positive feedback iR compensation was employed to liminate errors due to solution resistance. The electrochemical cell was constructed from materials purchased from Bioanalytical Systems, Inc. (BAS). The non-aqueous reference electrode was a silver wire immersed in a glass tube containing a 0.100 mol L-1 solution of AgN03 in the [bmim][N03] ionic liquid which was separated from the bulk solution by a Vycor plug. All potentials reported are referenced against the Ag(I)/Ag couple. The counter electrode was a platinum coil immersed directly in the bulk solution. For voltammetry, the working disk electrodes used were platinum (A = 2.01 × 10-2 cm2) and glassy carbon (A = 7.07 × 10-2 cm2. The solution was held in a glass vial fitted with a Teflon cap with holes for the electrodes and a nitrogen line.

## Claims

1. Salts of the general formula [I],
[PR¹R²R³R⁴]⁺[B(OR⁵)ₙ(OR⁶)ₘ(OR⁷)ₒ(OR⁸)ₚ]⁻ [I]
wherein
R¹, R², R³, R⁴ denote, in each case independently of one another, a C₁₋₂₀ linear, branched or cyclic, saturated or unsaturated aliphatic radical
or a C₆₋₂₀-aromatic or heteroaromatic radical,
wherein the aliphatic, aromatic or heteroaromatic radicals may comprise one or more ether functional groups and/or may be further substituted, preferably further substituted by at least one radical of the formula -C_{q}F_{(2q+1-x)}Hₓ, wherein 1≤q≤6 and 0≤x≤2q+1,
R⁵, R⁶, R⁷ and R⁸ denote, in each case independently of one another, a C₆₋₂₀ aromatic or heteroaromatic radical, that may be further substituted by at least one halogen-radical, preferably a F- or Cl-radical and/or at least one radical of the formula -C_{q}F_{(2q+1-x)}Hₓ, wherein 1≤q≤6 and 0≤x≤2q+1,
or a C₁₋₈, linear, branched or cyclic, saturated or unsaturated, aliphatic radical, that may be further substituted by at least one halogen-radical, preferably a F- or Cl-radical and/or at least one radical of the formula -N(C_{q}F_{(2q+1-x)}Hₓ)₂, -O(C_{q}F_{(2q+1-x)}Hₓ), -SO₂ (C_{q}P_{(2q+1-x)}Hₓ) or -C_{q}F_{(2q+1-x)}Hₓ, wherein 1≤q≤6 and 0≤x≤2q+1,
or a carboxylic-, dicarboxylic- or hydroxycarboxylic, linear, branched or cyclic, saturated or unsaturated C₁₋₈-aliphatic or C₆₋₂₀-aromatic or heteroaromatic radical that may be further substituted by at least one halogen-radical, preferably a F- or Cl-radical and/or at least one radical of the formula -N(C_{q}F_{(2q+1-x)}Hₓ)₂, -O(C_{q}F_{(2q+1-x)}Hₓ), -SO₂ (C_{q}F_{(2q+1-x)}Hₓ) or -C_{q}F_{(2q+1-x)}Hₓ,wherein 1≤q≤6 and 0≤x≤2q+1,
and wherein
at least two of the radicals R¹, R², R³, R⁴ may be bound to each other by single or double bonds, and/or
at least two of the radicals R⁵, R⁶, R⁷, R⁸ may be bound to each other by single or double bonds,
and 0 ≤ n, m, o, p ≤ 4 and m + n + o + p = 4
and wherein the following salts are disclaimed:
Bis[salicylato(2-)]borate (III)-tetrabutylphosphonium,
Tetrakis[1-naphthalenolato (1-)]-borate-tetraphenylphosphonium,
Bis[2-hydroxybenzoato (2-)]-borate-tetrabutylphosphonium,
Bis[1,2-benzodiolato(2-), O, O']-borate-tetraphenylphosphonium,
Tetrabutoxy(1-)borate-tetraphenylphosphonium,
Tetrakis(1,1'biphenyl-4,4'-diolato)-borate-tetraphenylphosphonium,
Bis[2,3-naphthalendiolato (2-) O, O']-borate-tetraphenylphosphonium.

2. Salts according to claim 1, **characterized in that** at least two of the radicals R¹, R², R³, R⁴ are identical and/or bound to each other by single or double bonds.

3. Salts according to claim 1 or 2, **characterized in that** at least two of the radicals R⁵, R⁶, R⁷, R⁸ are identical and/or bound to each other by single or double bonds.

4. Salts according to claims 1 to 3, **characterized in that** at least one of the radicals, R⁵, R⁶, R⁷ and R⁸ denotes, in each case independently of one another, a radical selected from the group consisting of phenyl-, naphthyl-, anthracenyl, phenanthrenyl, pyridyl-, pyracyl- or pyrimidyl-radicals, that may be further substituted by at least one halogen radical, preferably a F- or Cl-radical and/or at least one radical of the formula -C_{q}F_{(2q+1-x)}Hₓ, wherein 1≤q≤6 and 0≤x≤2q+1.

5. Salt according to claims 1 to 4, wherein at least one of the radicals R¹, R², R³, R⁴ denotes phenyl or C₁₋₂₀-alkyl, preferably C₆H₁₃- oder C₁₄H₂₉-alkyl.

6. Salt according to claims 1 to 5, wherein at least two of the radicals R⁵, R⁶, R⁷ or R⁸ denote a 2,2'-biphenyl-diolato(2')O,O'-, a 1,2-benzen-diolato(2-) O,O'- or a salicylato(2-)-radical.

7. Salt according to any one of claims 1 to 6, wherein [B(OR⁵)ₙ(OR⁶)ₘ (OR⁷)ₒ(OR⁸)ₚ]⁻ denotes bis[2,2'-biphenyl-diolato(2')O,O']-borate, bis[1,2-benzen-diolato(2-)O,O']-borate or bis[salicytato(2-)]-borate.

8. Method for the preparation of salts, wherein a salt of the general formula [II]
[PR¹R²R³R⁴]ₐ ⁺A^{a-} [II]
and a salt of the general formula [III]
K^{b+}[B(OR⁵)ₙ(OR⁶)ₘ(OR⁷)ₒ(OR⁸)ₚ]_{b} ⁻ [III]
wherein
A- denotes an anion, a= 1 to 3, preferably a=1, more preferably an anion chosen from Cl, Br or I,
K⁺ denotes a cation, b= 1 to 3, preferably b=1, more preferably a cation chosen from H, Li, K, Na, Ag or NR¹₄⁺,
and R¹, R², R³, R⁴, R⁵, R⁶, R⁷, R⁸, n, m, o, p, have the meanings according to claim 1,
are disolved in a suitable solvent and mixed and the resulting salt is isolated and/or purified.

9. Method according to claim 8, wherein the resulting salt is purified by separating the byproduct K⁺A⁻ by precipitation, ionic exchange chromatography or by evaporation, if K⁺ denotes hydrogen.

10. Method according to claim 8 or 9, wherein the suitable solvent is acetonitrile or THF (tetrahydrofurane) or a mixture of at least two of these solvents.

11. Method according to claim 8 or 9, wherein the suitable solvent is an aprotic solvent, preferably acetonitrile or THF (tetrahydrofurane) or a mixture of at least two aprotic solvents, wherein the resulting salt K⁺A⁻ is unsoluble.

12. Method according to claims 8 to 11 wherein the mixing of the salts of formula [II] and [III] is performed at a temperature of 0 to 100°C, preferably 0 to 50°C, more preferably 10 to 40°C.

13. Method according to claims 8 to 12, wherein the reaction is carried out in a solvent or solvent mixture that is directly suitable for use in a secondary or primary battery, a capacitor, a supercapacitor or a galvanic cell.

14. Method according to claim 13, wherein the solvent is an organic carbonate, preferably an ethylenecarbonate, propylenecarbonate, butylene-carbonate, dimethylcarbonate, diethylcarbonate, ethylmethytcarbonate, methylpropylcarbonate or a mixture of at least two of these solvents.

15. Use of at least one of the salts according to any one of claims 1 to 7 alone or in combination with further salts and/or additives in primary batteries, secondary batteries, capacitors, supercapacitors and/or galvanic cells.

16. Electrolyte, preferably for primary batteries, secondary batteries, capacitors, supercapacitors and/or galvanic cells, comprising at least one compound of the general formula [I] according to any one of claims 1 to 7.

17. Electrolyte according to claim 16, wherein the salt concentration of the electrolyte is 0,01 - 3 mol/l, preferably 0,01 - 2 mol/l, most preferably 0,1 - 1,5 mol/l.

18. Primary battery comprising at least one compound of the general formula [I] according to any one of claims 1 to 7.

19. Secondary battery comprising at least one compound of the general formula [I] according to any one of claims 1 to 7.

20. Capacitor comprising at least one compound of the general formula [I] according to any one of claims 1 to 7.

21. Supercapacitor comprising at least one compound of the general formula [I] according to any one of claims 1 to 7.

22. Galvanic cell comprising at least one compound of the general formula [I] according to any one of claims 1 to 6.

23. Hydraulic liquid comprising at least one compound of the general formula [I] according to any one of claims 1 to 6.

24. Use of a salt according to any one of claims 1 to 7 as an ionic liquid or as a conducting salt in an electrolyte of electrochemical devices.

25. Use of a salt according to any one of claims 1 to 7 as a catalyst, solvent, electrolyte or starting compound for the preparation of organic compounds.

## Patentansprüche

1. Salze der allgemeinen Formel [I],
[PR¹R²R³R⁴]⁺[B(OR⁵)ₙ(OR⁶)ₘ(OR⁷)ₒ(OR⁸)ₚ]⁻ [I]
worin
R¹, R², R³, R⁴ jeweils unabhängig voneinander einen C₁₋₂₀ linearen, verzweigten oder cyclischen, gesättigten oder ungesättigten aliphatischen Rest
oder einen C₆₋₂₀-aromatischen oder heteroaromatischen Rest bedeuten, worin die aliphatischen, aromatischen oder heteroaromatischen Reste eine oder mehrere etherfunktionelle Gruppen enthalten können und/oder weiter substituiert, vorzugsweise durch mindestens einen Rest der Formel -C_{q}F_{(2q+1-x)}Hₓ, worin 1≤q≤6 und 0≤x≤2q+1, weiter substituiert sein können,
R⁵, R⁶, R⁷ und R⁸ jeweils unabhängig voneinander einen C₆₋₂₀ aromatischen oder heteroaromatischen Rest, der durch mindestens einen Halogenrest, vorzugsweise einen F- oder Cl-Rest, und/oder mindestens einen Rest der Formel -C_{q}F_{(2q+1-x)}Hₓ, worin 1≤q≤6 und 0≤x≤2q+1, weiter substituiert sein kann,
oder einen C₁₋₈ linearen, verzweigten oder cyclischen, gesättigten oder ungesättigten, aliphatischen Rest, der durch mindestens einen Halogenrest, vorzugsweise einen F- oder Cl-Rest, und/oder mindestens einen Rest der Formel -N(C_{q}F_{(2q+1-x)}Hₓ)₂, -O(C_{q}F_{(2q+1-x)}Hₓ), -SO₂(C_{q}F_{(2q+1-x)}Hₓ) oder -C_{q}F_{(2q+1-x)}Hₓ, worin 1≤q≤6 und 0≤x≤2q+1, weiter substituiert sein kann,
oder einen linearen, verzweigten oder cyclischen, gesättigten oder ungesättigten C₁₋₈-aliphatischen oder C₆₋₂₀-aromatischen oder heteroaromatischen Carboxyl-, Dicarboxyl- oder Hydroxycarboxylrest, der durch mindestens einen Halogenrest, vorzugsweise einen F- oder Cl-Rest, und/oder mindestens einen Rest der Formel -N(C_{q}F_{(2q+1-x)}Hₓ)₂, -O(C_{q}F_{(2q+1-x)}Hₓ), -SO₂(C_{q}F_{(2q+1-x)}Hₓ) oder -C_{q}F_{(2q+1-x)}Hₓ, worin 1≤q≤6 und 0≤x≤2q+1, weiter substituiert sein kann,
bedeuten
und worin
mindestens zwei der Reste R¹, R², R³, R⁴ miteinander durch Einfach- oder Doppelbindungen verknüpft sein können, und/oder
mindestens zwei der Reste R⁵, R⁶, R⁷, R³ miteinander durch Einfach- oder Doppelbindungen verknüpft sein können
und 0 ≤ n, m, o, p ≤ 4 und m + n + o + p = 4
und worin die folgenden Salze nicht beansprucht sind:
Tetrabutylphosphonium-bis[salicylato(2-)]borat(III),
Tetraphenylphosphonium-tetrakis[1-naphthalenolato(1-)]-borat,
Tetrabutylphosphonium-bis[2-hydroxybenzoato(2-)]-borat,
Tetraphenylphosphonium-bis[1,2-benzoldiolato(2-)-O,O']-borat,
Tetraphenylphosphonium-tetrabutoxy(1-)borat,
Tetraphenylphosphonium-tetrakis(1,1'-biphenyl-4,4'-diolato)-borat,
Tetraphenylphosphonium-bis[2,3-naphthalendiolato(2-)-O,O']-borat.

2. Salze nach Anspruch 1, **dadurch gekennzeichnet, dass** mindestens zwei der Reste R¹, R², R³, R⁴ gleich und/oder miteinander durch Einfach- oder Doppelbindungen verknüpft sind.

3. Salze nach Anspruch 1 oder 2, **dadurch gekennzeichnet, dass** mindestens zwei der Reste R⁵, R⁶, R⁷, R⁸ gleich und/oder miteinander durch Einfach- oder Doppelbindungen verknüpft sind.

4. Salze nach den Ansprüchen 1 bis 3, **dadurch gekennzeichnet, dass** mindestens einer der Reste R⁵, R⁶, R⁷ und R⁸ jeweils unabhängig voneinander einen Rest ausgewählt aus der Gruppe der Phenyl-, Naphthyl-, Anthracenyl-, Phenanthrenyl-, Pyridyl-, Pyracyl- oder Pyrimidylreste bedeutet, der durch mindestens einen Halogenrest, vorzugsweise einen F- oder Cl-Rest, und/oder mindestens einen Rest der Formel -C_{q}F_{(2q+1-x)}Hₓ, worin 1≤q≤6 und 0≤x≤2q+1, weiter substituiert sein kann.

5. Salz nach den Ansprüchen 1 bis 4, worin mindestens einer der Reste R¹, R², R³, R⁴ Phenyl oder C₁₋₂₀-Alkyl, vorzugsweise C₆H₁₃- oder C₁₄H₂₉-Alkyl bedeutet.

6. Salz nach den Ansprüchen 1 bis 5, worin mindestens zwei der Reste R⁵, R⁶, R⁷ oder R⁸ einen 2,2'-Biphenyl-diolato(2')-O,O'-, einen 1,2-Benzol-diolato(2-)-O,O'- oder einen Salicylato(2-)-Rest bedeuten.

7. Salz nach einem beliebigen der Ansprüche 1 bis 6, worin [B(OR⁵)ₙ(OR⁶)ₘ(OR⁷)ₒ(OR⁸)ₚ]⁻ Bis[2,2'-biphenyl-diolato(2')-O,O']-borat, Bis[1,2-benzol-diolato(2-)-O,O']-borat oder Bis[salicylato(2-)]-borat bedeutet.

8. Verfahren zur Herstellung von Salzen, worin ein Salz der allgemeinen Formel [II]
[PR¹R²R³R⁴]ₐ ⁺A^{a-} [II]
und ein Salz der allgemeinen Formel [III]
K^{b+}[B(OR⁵)ₙ(OR⁶)ₘ(OR⁷)ₒ(OR⁸)ₚ]_{b} ⁻ [III]
worin
A⁻ ein Anion, a= 1 bis 3, vorzugsweise a=1, stärker bevorzugt ein Anion ausgewählt aus Cl, Br oder I bedeutet,
K⁺ ein Kation, b= 1 bis 3, vorzugsweise b=1, stärker bevorzugt ein Kation ausgewählt aus H, Li, K, Na, Ag oder NR¹₄⁺ bedeutet,
und R¹, R², R³, R⁴, R⁵, R⁶, R⁷, R⁸, n, m, o, p die Bedeutungen nach Anspruch 1 besitzen,
in einem geeigneten Lösungsmittel gelöst und gemischt werden und das entstehende Salz isoliert und/oder gereinigt wird.

9. Verfahren nach Anspruch 8, worin das entstehende Salz gereinigt wird, indem man, das Nebenprodukt K⁺A⁻ durch Fällung, lonenaustauschchromatographie oder durch Eindampfen wenn K⁺ Wasserstoff bedeutet, abtrennt.

10. Verfahren nach Anspruch 8 oder 9, worin das geeignete Lösungsmittel Acetonitril oder THF (Tetrahydrofuran) oder ein Gemisch aus mindestens zweien dieser Lösungsmittel ist.

11. Verfahren nach Anspruch 8 oder 9, worin das geeignete Lösungsmittel ein aprotisches Lösungsmittel, vorzugsweise Acetonitril oder THF (Tetrahydrofuran) oder ein Gemisch aus mindestens zwei aprotischen Lösungsmitteln ist, worin das entstehende Salz K⁺A⁻ unlöslich ist.

12. Verfahren nach den Ansprüchen 8 bis 11, worin das Mischen der Salze der Formeln [II] und [III] bei einer Temperatur von 0 bis 100°C, vorzugsweise 0 bis 50°C, stärker bevorzugt 10 bis 40°C stattfindet.

13. Verfahren nach den Ansprüchen 8 bis 12, worin die Reaktion in einem Lösungsmittel oder Lösungsmittelgemisch durchgeführt wird, das direkt zur Verwendung in einer sekundären oder primären Batterie, einem Kondensator, einem Superkondensator oder einer galvanischen Zelle geeignet ist.

14. Verfahren nach Anspruch 13, worin das Lösungsmittel ein organisches Carbonat, vorzugsweise ein Ethylencarbonat, Propylencarbonat, Butylencarbonat, Dimethylcarbonat, Diethylcarbonat, Ethylmethylcarbonat, Methylpropylcarbonat oder ein Gemisch aus mindestens zweien dieser Lösungsmittel ist.

15. Verwendung mindestens eines der Salze nach einem beliebigen der Ansprüche 1 bis 7 für sich oder in Kombination mit weiteren Salzen und/oder Zusatzstoffen in primären Batterien, sekundären Batterien, Kondensatoren, Superkondensatoren und/oder galvanischen Zellen.

16. Elektrolyt, vorzugsweise für primäre Batterien, sekundäre Batterien, Kondensatoren, Superkondensatoren und/oder galvanische Zellen, enthaltend mindestens eine Verbindung der allgemeinen Formel [I] nach einem beliebigen der Ansprüche 1 bis 7.

17. Elektrolyt nach Anspruch 16, worin die Salzkonzentration des Elektrolyts 0,01 - 3 mol/l, vorzugsweise 0,01 - 2 mol/l, ganz bevorzugt 0,1 -1,5 mol/l beträgt.

18. Primäre Batterie enthaltend mindestens eine Verbindung der allgemeinen Formel [I] nach einem beliebigen der Ansprüche 1 bis 7.

19. Sekundäre Batterie enthaltend mindestens eine Verbindung der allgemeinen Formel [I] nach einem beliebigen der Ansprüche 1 bis 7.

20. Kondensator enthaltend mindestens eine Verbindung der allgemeinen Formel [I] nach einem beliebigen der Ansprüche 1 bis 7.

21. Superkondensator enthaltend mindestens eine Verbindung der allgemeinen Formel [I] nach einem beliebigen der Ansprüche 1 bis 7.

22. Galvanische Zelle enthaltend mindestens eine Verbindung der allgemeinen Formel [I] nach einem beliebigen der Ansprüche 1 bis 6.

23. Hydraulikflüssigkeit enthaltend mindestens eine Verbindung der allgemeinen Formel [I] nach einem beliebigen der Ansprüche 1 bis 6.

24. Verwendung eines Salzes nach einem beliebigen der Ansprüche 1 bis 7 als ionische Flüssigkeit oder als Leitsatz in einem Elektrolyten in elektrochemischen Vorrichtungen.

25. Verwendung eines Salzes nach einem beliebigen der Ansprüche 1 bis 7 als Katalysator, Lösungsmittel, Elektrolyt oder Ausgangsverbindung für die Herstellung organischer Verbindungen.

## Revendications

1. Sels de la formule générale [I],
[PR¹R²R³R⁴]⁺[B(OR⁵)ₙ(OR⁶)ₘ(OR⁷)ₒ(OR⁸)ₚ]⁻ [I]
dans laquelle
R¹, R², R³, R⁴ représentent, dans chaque cas indépendamment les uns des autres, un radical aliphatique C₁₋₂₀ linéaire, ramifié ou cyclique, saturé ou non saturé
ou un radical aromatique ou hétéroaromatique C₆₋₂₀,
dans lesquels les radicaux aliphatique, aromatique ou hétéroaromatique peuvent comprendre un ou plusieurs groupes fonctionnels éther et/ou peuvent être en outre substitués, de préférence en outre substitués par au moins un radical de la formule -C_{q}F_{(2q+1-x)}Hx dans laquelle 1≤q≤6 et 0≤x≤2q+1,
R⁵, R⁶, R⁷ et R⁸ représentent, dans chaque cas indépendamment les uns des autres, un radical aromatique ou hétéroaromatique C₆₋₂₀ qui peut être en outre substitué par au moins un radical halogène, de préférence un radical F ou Cl et/ou au moins un radical de la formule -C_{q}F_{(2q+1-x)}Hₓ dans laquelle 1<q<6 et 0≤x≤2q+1,
ou un radical aliphatique C₁₋₈, linéaire, ramifié ou cyclique, saturé ou non saturé qui peut être en outre substitué par au moins un radical halogène, de préférence un radical F ou Cl et/ou au moins un radical de la formule -N(C_{q}F_{(2q+1-x)}Hₓ)₂, -O(C_{q}F_{(2q+1-x)}Hx), -SO₂(C_{q}F_{(2q+1-x)}Hₓ) ou -C_{q}F_{(2q+1-x)}Hₓ, dans laquelle 1≤q≤6 et 0≤x≤2q+1,
ou un radical aliphatique C₁₋₈ ou aromatique ou hétéroaromatique C₆₋₂₀ carboxylique, dicarboxylique ou hydroxycarboxylique, linéaire, ramifié ou cyclique, saturé ou non saturé qui peut être en outre substitué par au moins un radical halogène, de préférence un radical F ou Cl et/ou au moins un radical de la formule -N(C_{q}F_{(2q+1-x)}Hₓ)₂, -O(C_{q}F_{(2q+1-x)}Hx), -SO₂(C_{q}F_{(2q+1-x)}Hₓ) ou -C_{q}F_{(2q+1-x)}Hₓ dans laquelle 1≤q≤6 et 0≤x≤2q+1,
et dans lesquels
au moins deux des radicaux R¹, R², R³, R⁴ peuvent être liés les uns aux autres par des liaisons simples ou doubles, et/ou
au moins deux des radicaux R⁵, R⁶, R⁷, R⁸ peuvent être liés les uns aux autres par des liaisons simples ou doubles,
et 0 ≤ n, m, o, p ≤ 4 et m + n + o + p = 4
et dans lesquels les sels qui suivent sont écartés:
tétrabutylphosphonium bis[salicylato(2-)]borate(III),
tétraphénylphosphonium tétrakis[1-naphthalènolato (1-)]-borate,
tétrabutylphosphonium bis[2-hydroxybenzoato (2-)]borate,
tétraphénylphosphonium bis[1,2-benzodiolato(2-)-O,O']-borate,
tétraphénylphosphonium tétrabutoxy(1-)borate,
tétraphénylphosphonium tétrakis(1,1'biphényl-4,4'-diolato)-borate,
tétraphénylphosphonium bis[2,3-naphthalènediolato (2-)-O,O']-borate.

2. Sels selon la revendication 1, **caractérisés en ce qu'**au moins deux des radicaux R¹, R², R³, R⁴ sont identiques et/ou sont liés les uns aux autres par des liaisons simples ou doubles.

3. Sels selon la revendication 1 ou 2, **caractérisés en ce qu'**au moins deux des radicaux R⁵, R⁶, R⁷, R⁸ sont identiques et/ou liés les uns aux autres par des liaisons simples ou doubles.

4. Sels selon les revendications 1 à 3, **caractérisés en ce qu'**au moins l'un des radicaux R⁵, R⁶, R⁷ et R⁸ représentent, dans chaque cas indépendamment les uns des autres, un radical qui est choisi à partir du groupe qui est constitué par des radicaux phényle, naphthyle, anthracényle, phénanthrényle, pyridyle, pyracyle ou pyrimidyle, qui peuvent être en outre substitués par au moins un radical halogène, de préférence un radical F ou Cl et/ou au moins un radical de la formule -C_{q}F_{(2q+1-x)}Hₓ, dans laquelle 1≤q≤6 et 0≤x≤2q+1.

5. Sel selon les revendications 1 à 4, dans lequel au moins l'un des radicaux R¹, R², R³, R⁴ représentent phényle ou alkyle C₁₋₂₀, de préférence alkyle C₆H₁₃ ou C₁₄H₂₉.

6. Sel selon les revendications 1 à 5, dans lequel au moins deux des radicaux R⁵, R⁶, R⁷ ou R⁸ représentent un radical 2,2'-biphényl-diolato(2')-O,O', un radical 1,2-benzène-diolato(2-)-O,O' ou un radical salicylato(2-).

7. Sel selon l'une quelconque des revendications 1 à 6, dans lequel [B(OR⁵)ₙ(OR⁶)ₘ(OR⁷)ₒ(OR⁸)ₚ]⁻ représente bis[2,2'-biphényl-diolato(2')-O,O']-borate, bis[1,2-benzène-diolato(2-)-O,O']-borate ou bis[salicylato(2-)]-borate.

8. Procédé pour la préparation de sels, dans lequel un sel de la formule générale [II]
[PR¹R²R³R⁴]ₐ ⁺A^{a-} [II]
et un sel de la formule générale [III]
K^{b+}[B(OR⁵)ₙ(OR⁶)ₘ(OR⁷)ₒ(OR⁸)ₚ]_{b} ⁻ [III]
dans lesquelles
A⁻ représente un anion, a = 1 à 3, de préférence a = 1, de façon davantage préférable un anion choisi parmi Cl, Br ou I,
K⁺ représente un cation, b = 1 à 3, de préférence b = 1, de façon davantage préférable un cation choisi parmi H, Li, K, Na, Ag ou NR¹₄⁺, et R¹, R², R³, R⁴, R⁵, R⁶, R⁷, R⁸, n, m, o, p présentent les significations selon la revendication 1,
sont dissous dans un solvant approprié et sont mélangés et le sel résultant est isolé et/ou purifié.

9. Procédé selon la revendication 8, dans lequel le sel résultant est purifié en séparant le sous-produit K⁺A⁻ par précipitation, par chromatographie échangeuse d'ions ou par évaporation, si K⁺ représente hydrogène.

10. Procédé selon la revendication 8 ou 9, dans lequel le solvant approprié est acétonitrile ou THF (tétrahydrofurane) ou un mélange d'au moins deux de ces solvants.

11. Procédé selon la revendication 8 ou 9, dans lequel le solvant approprié est un solvant aprotique, de préférence acétonitrile ou THF (tétrahydrofurane) ou un mélange d'au moins deux solvants aprotiques, dans lequel le sel résultant K⁺A⁻ est non soluble.

12. Procédé selon les revendications 8 à 11, dans lequel le mélange des sels des formules [II] et [III] est réalisé à une température de 0 à 100°C, de préférence de 0 à 50°C, de façon davantage préférable de 10 à 40°C.

13. Procédé selon les revendications 8 à 12, dans lequel la réaction est mise en oeuvre dans un solvant ou un mélange de solvants qui est directement approprié pour une utilisation dans un accumulateur primaire ou secondaire, un condensateur, un supercondensateur ou une cellule galvanique.

14. Procédé selon la revendication 13, dans lequel le solvant est un carbonate organique, de préférence un carbonate d'éthylène, un carbonate de propylène, un carbonate de butylène, un carbonate de diméthyle, un carbonate de diéthyle, un carbonate d'éthylméthyle, un carbonate de méthylpropyle ou un mélange d'au moins deux de ces solvants.

15. Utilisation d'au moins l'un des sels selon l'une quelconque des revendications 1 à 7 seul ou en combinaison avec d'autres sels et/ou additifs dans des accumulateurs primaires, des accumulateurs secondaires, des condensateurs, des supercondensateurs et/ou des cellules galvaniques.

16. Electrolyte, de préférence pour des accumulateurs primaires, des accumulateurs secondaires, des condensateurs, des supercondensateurs et/ou des cellules galvaniques, comprenant au moins un composé de la formule générale [I] selon l'une quelconque des revendications 1 à 7.

17. Electrolyte selon la revendication 16, dans lequel la concentration en sel de l'électrolyte est de 0,01 à 3 mol/l, de préférence de 0,01 à 2 mol/l, de la façon la plus préférable de 0,1 à 1,5 mol/l.

18. Accumulateur primaire comprenant au moins un composé de la formule générale [I] selon l'une quelconque des revendications 1 à 7.

19. Accumulateur secondaire comprenant au moins un composé de la formule générale [I] selon l'une quelconque des revendications 1 à 7.

20. Condensateur comprenant au moins un composé de la formule générale [I] selon l'une quelconque des revendications 1 à 7.

21. Supercondensateur comprenant au moins un composé de la formule générale [I] selon l'une quelconque des revendications 1 à 7.

22. Cellule galvanique comprenant au moins un composé de la formule générale [I] selon l'une quelconque des revendications 1 à 6.

23. Liquide hydraulique comprenant au moins un composé de la formule générale [I] selon l'une quelconque des revendications 1 à 6.

24. Utilisation d'un sel selon l'une quelconque des revendications 1 à 7 en tant que liquide ionique ou en tant que sel conducteur dans un électrolyte de dispositifs électrochimiques.

25. Utilisation d'un sel selon l'une quelconque des revendications 1 à 7 en tant que catalyseur, solvant, électrolyte ou composé de départ pour la préparation de composés organiques.
